# EUROPÄISCHE PATENTSCHRIFT

(11) **EP 3 590 795 B1**
(45) Veröffentlichungstag und Bekanntmachung des Hinweises auf die Patenterteilung: **21.12.2022**
(21) Anmeldenummer: 18182209.9
(22) Anmeldetag: 06.07.2018
(51) Int. Cl.: B62D 33/04

(54) **PANEELSTRUKTURELEMENT EINES AUFBAUS EINES NUTZFAHRZEUGS SOWIE KOFFERAUFBAU UND NUTZFAHRZEUG**
PANEL STRUCTURE ELEMENT OF A STRUCTURE OF A COMMERCIAL VEHICLE AND BOX BODY AND COMMERCIAL VEHICLE
ÉLÉMENT STRUCTURAL DE PANNEAU D'UNE CONSTRUCTION D'UN VÉHICULE UTILITAIRE AINSI QUE COFFRE ET VÉHICULE UTILITAIRE

(43) Veröffentlichungstag der Anmeldung: 08.01.2020
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- WO-A1-2016/091280
- US-A1- 2002 098 053
- US-A1- 2002 100 171
- US-A1- 2015 078 804

## Beschreibung

Die Erfindung betrifft ein Paneelstrukturelement eines Aufbaus eines Nutzfahrzeugs, insbesondere Lastkraftwagen, Anhänger oder Sattelauflieger, mit einer Mehrzahl von zur Aussteifung des Paneelstrukturelements vorgesehenen, wenigstens im Wesentlichen quer zur Längsrichtung des Paneelstrukturelements ausgerichteten und in Längsrichtung des Paneelstrukturelements zwischen den Rändern des Paneelstrukturelements angeordneten sowie voneinander beabstandeten Ständerelementen, und mit einem sich über wenigstens im Wesentlichen die gesamte Länge und wenigstens im Wesentlichen die gesamte Höhe des Paneelstrukturelements erstreckenden, insbesondere geschlossenen, Paneel, wobei das Paneel aus wenigstens einem Paneelelement gebildet wird, wobei die Ständerelemente mit dem Paneel verbunden sind. Ferner betrifft die Erfindung einen Kofferaufbau mit einem solchen Paneelstrukturelement, wobei das wenigstens eine Paneelelement aus einem Verbundlaminat umfassend wenigstens zwei Metallschichten und wenigstens eine zwischen den wenigstens zwei Metallschichten vorgesehene Kunststoffschicht gebildet wird, wobei das Paneel eine Mehrzahl von in Längsrichtung des Paneelstrukturelements nebeneinander angeordneten Paneelelementen aufweist, wobei die Paneelelemente über sich wenigstens im Wesentlichen quer zur Längsrichtung des Paneelstrukturelements erstreckenden Verbindungsbereichen miteinander verbunden sind und wobei die Ständerelemente wenigstens teilweise den Verbindungsbereichen der Paneelelemente zugeordnet sind. Zudem betrifft die Erfindung ein Nutzfahrzeug mit einem solchen Kofferaufbau.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen und beispielsweise aus der US 2002/0098053 A1 bekannt. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken des Nutzfahrzeugs befinden.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden entsprechende Paneelstrukturelemente auf, die als zweischaliges Paneel ausgebildet sein können. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein. Darüber hinaus sind Kofferaufbauten mit einschaligen Paneelstrukturelementen bekannt, die einen von einem Paneel verschlossenen, umlaufenden Rahmen oder eine von einem Paneel verschlossene Gitterstruktur aus vertikalen und horizontalen Profilen aufweisen. Das Paneel wird dabei aus einem oder aus mehreren Paneelelementen gebildet, die wenigstens im Wesentlichen aus einem glasfaserverstärkten Kunststoff, Stahl oder Aluminium bestehen, sowie bedarfsweise lackiert sind.

Um beispielweise das Dach abzustützen, können die Paneelstrukturelemente mit einer Mehrzahl von zur Aussteifung des Paneelstrukturelements vorgesehenen, wenigstens im Wesentlichen quer zur Längsrichtung des Paneelstrukturelements ausgerichteten und in Längsrichtung des Paneelstrukturelements zwischen den Rändern des Paneelstrukturelements angeordneten Ständerelementen vorgesehen sein. In einigen Fällen sind die Ständerelemente dann ähnlich den Mittelrungen von Planenaufbauten in Längsrichtung des Paneelstrukturelements voneinander beabstandet angeordnet, um einen Holm des Aufbaus zu tragen. Ferner können die Ständerelemente an der Innenseite des Paneelstrukturelements mit einem geschlossenen Paneel verbunden sein, das selbst aus mehreren Paneelstrukturelementen gebildet sein und sich über wenigstens im Wesentlichen die gesamte Länge sowie wenigstens im Wesentlichen die gesamte Höhe des Paneelstrukturelements erstrecken kann.

Kofferaufbauten weisen gegenüber Planenaufbauten eine Reihe von Vorteilen auf. Kofferaufbauten sind jedoch meist schwerer, wodurch die maximal zulässige Zuladung begrenzt wird. Außerdem sind Kofferaufbauten in der Herstellung meist teurer als Planenaufbauten. Mithin sind Kofferaufbauten für viele Einsatzgebiete für Spediteure mit funktionalen Vorteilen, aber gleichwohl mit wirtschaftlichen Nachteilen verbunden.

Daher liegt der vorliegenden Erfindung die Aufgabe zugrunde, das Paneelstrukturelement, den Kofferaufbau und das Nutzfahrzeug jeweils der eingangs genannten und zuvor näher beschriebenen Art derart auszugestalten und weiterzubilden, dass das Paneelstrukturelement weiter ausgesteift und langlebiger ausgebildet wird.

Diese Aufgabe ist bei einem Paneelstrukturelement nach dem Oberbegriff von Anspruch 1 dadurch gelöst, dass die Ständerelemente wenigstens teilweise die Verbindungsbereiche der Paneelelemente überdeckend und/oder überbrückend angeordnet sind.

Zudem wird die genannte Aufgabe bei einem Kofferaufbau gemäß Oberbegriff von Anspruch 15 dadurch gelöst, dass wenigstens ein Paneelstrukturelement nach einem der Ansprüche 1 bis 14 vorgesehen ist.

Des Weiteren wird die zuvor genannte Aufgabe durch ein Nutzfahrzeug nach dem Oberbegriff von Anspruch 16 dadurch gelöst, dass wenigstens ein Kofferaufbau nach Anspruch 15 vorgesehen ist.

Durch die Verwendung eines Verbundlaminats zur Bildung des wenigstens einen Paneelelements kann ein leichtes und zugleich steifes Paneel geschaffen werden. Dabei bietet der Aufbau des wenigstens einen Paneelelements mit zwei Metallschichten und einer dazwischen vorgesehenen Kunststoffschicht nicht nur ein hohes Maß an Steifigkeit, sondern auch eine hohe Schlagzähigkeit und eine hohe Festigkeit. Dies erlaubt letztlich eine einschalige Ausgestaltung des Paneelstrukturelements. Das Paneelstrukturelement bedarf mithin lediglich eines einzigen geschlossenen Paneels, was folglich eine einschalige Bauweise des Paneelstrukturelements ermöglicht.

Um zu verhindern, dass das Paneel unter Last knickt, werden seitlich an dem Paneel Ständerelemente angebracht und zwar in entsprechenden Abständen, um das gewünschte Flächenträgheitsmoment zu erzielen. Die äußeren Ständerelemente können im Falle einer Stirnwand und/oder einer Seitenwand auch als Eckrungen ausgebildet sein, welche einen Längsholm und/oder Querholm tragen. Dies ist aber nicht zwingend erforderlich. Jedenfalls sind zwischen den entsprechenden Rändern des Paneelstrukturelements weitere Ständerelemente vorgesehen, die dem entsprechenden Paneelstrukturelement die gewünschte Steifigkeit und Festigkeit verleihen. Neben dem einen Paneel und den, vorzugsweise wenigstens vier, insbesondere wenigstens sechs, Ständerelementen sind zwischen den gegenüberliegenden Rändern des Paneelstrukturelements für die Festigkeit und Steifigkeit vorzugsweise keine weiteren Bauteile erforderlich. Es können natürlich noch weitere Baueiteile vorgesehen sein. Diese können vorzugsweise aber der Ladungssicherung oder anderen Funktionen dienen.

Bei einer ersten besonders bevorzugten Ausgestaltung des Paneelstrukturelements ist die Kunststoffschicht des wenigstens einen Paneelelements wenigstens im Wesentlichen aus einem thermoplastischen Kunststoff, vorzugsweise aus wenigstens einem Olefin, insbesondere wenigstens überwiegend aus Polypropylen (PP) gebildet. Dies führt zu hohen Schlagzähigkeiten und einem geringen Gewicht des Paneelelements. Gleichzeitig sind entsprechende Kunststoffe kostengünstig und bei der Paneelfertigung einfach zu handhaben. Alternativ oder zusätzlich ist wenigstens eine der wenigstens zwei Metallschichten des wenigstens einen Wandpaneelelements aus Aluminium und/oder aus Stahl gebildet. Die wenigstens eine Metallschicht kann damit strukturgebend ausgebildet sein, um dem Wandpaneelelement die nötige Steifigkeit und Festigkeit zu verleihen. Außerdem ist das Wandpaneelelement so besser gegenüber äußeren Einwirkungen, etwa Witterungseinflüssen oder Kollisionen, geschützt. Um den Schutz insbesondere gegenüber Witterungseinflüssen zu verbessen, kann alternativ oder zusätzlich wenigstens eine Außenseite des wenigstens einen Wandpaneelelements wenigstens im Wesentlichen aus einem Lack, insbesondere Klarlack, gebildet sein.

Um ein Delaminieren zu verhindern und eine lange Lebensdauer des Wandpaneelelements bereitzustellen, kann die Kunststoffschicht an wenigstens einer Seite an eine Lackschicht, insbesondere aus Klarlack, und/oder einen Haftvermittler grenzen. Besonders bevorzugt ist es dabei, wenn die Kunststoffschicht über einen Haftvermittler mit der Lackschicht verbunden ist. So wird eine bevorzugte Anbindung an die Metallschichten ermöglicht, wobei die wenigstens eine Metallschicht vor dem Verbinden mit der Kunststoffschicht bereits mit der zuvor genannten Lackschicht versehen sein kann. Dabei hat sich in besonderem Maße Maleinsäureanhydrid als geeigneter Haftvermittler erwiesen, der in besonders bevorzugter Ausgestaltung nicht nur flächig auf die Kunststoffschicht aufgebracht, sondern wenigstens teilweise in der Randschicht des Kunststoffs, insbesondere des Polypropylens, vorgesehen ist. Für die geeignete Verbindung der wenigstens einen Metallschicht mit den weiteren Schichten des Verbundlaminats und/oder zum Schutz der wenigstens einen Metallschicht kann diese Metallschicht an wenigstens einer Seite eine wenigstens im Wesentlichen aus Aluminium und/oder Magnesium und/oder Zink gebildete Beschichtung aufweisen. Hinsichtlich eines Korrosionsschutzes haben sich insbesondere Aluminium-Zink oder Magnesium-Zink Beschichtungen bewährt.

Ein guter Kompromiss zwischen Kostensenkung und bevorzugten mechanischen Eigenschaften lässt sich beispielsweise erreichen, wenn die Kunststoffschicht eine Dicke zwischen 0,5 mm und 3 mm, vorzugsweise zwischen 0,6 mm und 2 mm, insbesondere zischen 0,8 mm und 1,2 mm, aufweist. Alternativ können aus demselben Grund die Metallschichten eine Dicke zwischen 50 µm und 900 µm, vorzugsweise zwischen 100 µm und 600 µm, insbesondere zwischen 200 µm und 300 µm, aufweisen. Wenn die wenigstens eine Metallschicht eine Beschichtung aufweist, kann diese vorzugsweise verhältnismäßig dünn sein und beispielsweise zwischen 8 µm und 30 µm, vorzugsweise zwischen 9 µm und 20 µm, insbesondere zischen 10 µm und 15 µm, liegen. Die Lack-, insbesondere Klarlack- und/oder Haftvermittlerschichten sind vorzugsweise dünner als 10 µm, vorzugsweise dünner als 5 µm, insbesondere dünner als 2,5 µm. Dies spart insbesondere Materialkosten ein, ohne jedoch zu Lasten der Langlebigkeit der Paneelelemente zu gehen. Als äußeren Abschluss, der vom Laderaum wegweist, kann zudem eine Lacksicht, bedarfsweise Klarlackschicht, mit einer Dicke zwischen 2,5 µm und 50 µm, vorzugsweise zwischen 5 µm und 30 µm, insbesondere zwischen 10 µm und 15 µm, vorgesehen sein, um den äußeren Einflüssen, wie den Witterungseinflüssen, für lange Zeit widerstehen zu können.

Fertigungstechnisch und aus Kostengesichtspunkten ist vorgesehen, dass das Wandpaneel eine Mehrzahl von in Längsrichtung des Wandstrukturelements nebeneinander angeordneten Paneelelementen aufweist. Das Paneel muss dann nicht aus einem einzigen Stück eines Verbundlaminats gebildet werden. Vielmehr lässt sich das Paneel aus mehreren vorgefertigten Paneelelementen zusammensetzen. Dabei sind die Paneelelemente über Verbindungsbereiche miteinander verbunden, die sich wenigstens im Wesentlichen quer zur Längsrichtung des Wandstrukturelements erstrecken. So können die Paneelelemente in einfacher Weise in der Längsrichtung des Paneels zur Bildung desselben zusammengesetzt werden. Zudem ist es besonders bevorzugt, wenn die Paneelelemente untereinander verklebt sind. So wird sichergestellt, dass die Paneele dicht und auch im Falle von Torsionsbelastungen sehr langlebig sind. Dabei ist es nicht ausgeschlossen, die Paneelelemente noch auf andere Weise als durch Verkleben zu verbinden. Diese anderen Verbindungen dienen dann jedoch bedarfsweise nur als Ergänzung und/oder sorgen für eine zuverlässige Verbindung bevor die Klebeverbindung ausgehärtet ist bzw. ihre endgültige Festigkeit erreicht hat. So kann das Paneel unmittelbar nach dem Verbinden der Paneelelemente miteinander gehandhabt werden, auch wenn die Klebeverbindung noch nicht fest ist.

Zur weiteren Aussteifung und zur Entlastung der Verbindungsbereiche der Paneelelemente sind die Ständerelemente den Verbindungsbereichen der Wandpaneelelemente zugeordnet. Grundsätzlich ist es denkbar, dass einzelnen Verbindungsbereichen keine Ständerelemente und/oder dass einzelne Ständerelemente keinem Verbindungsbereich zugeordnet sind. Bevorzugt ist es jedoch, dass wenigstens überwiegend oder wenigstens im Wesentlichen die Ständerelemente und die Verbindungsbereiche einander zugeordnet sind. Die Verbindungsbereiche der Paneelelemente können mechanisch entlastet werden, da die Ständerelemente die Verbindungsbereiche der Paneelelemente überdeckend und/oder überbrückend angeordnet sind. Auch dies muss nicht für alle Ständerelemente und/oder Verbindungsbereiche gelten, auch wenn dies wenigstens überwiegend oder wenigstens im Wesentlichen bevorzugt sein wird. Bei einer überdeckenden Anordnung der Ständerelemente sind diese entlang des Verbindungsbereichs angeordnet. Bei der überbrückenden Anordnung der Ständerelemente erstrecken sich die Ständerelemente seitlich über den Verbindungsbereich hinaus. Dabei ist der Übergang von einer überdeckenden zu einer überbrückenden Anordnung der Ständerelemente fließend, da auch die Grenzen des Verbindungsbereichs fließend sind.

Aus konstruktiver Sicht ist es dabei jedoch bevorzugt, weil dies einfach und stabil ist, wenn die Ständerelemente wenigstens teilweise außerhalb der Verbindungsbereiche der Paneelelemente mit jeweils den über Verbindungsbereiche miteinander verbundenen Paneelelementen verbunden, insbesondere verklebt, sind. Die Ständerelemente können dann Anlageflächen umfassen, die der Anlage an unterschiedliche Paneelelemente dienen. So können die benachbarten Paneelelemente über die Anlageflächen mit dem zugeordneten Ständerelement verbunden, insbesondere verklebt, werden. Um Material und Gewicht einzusparen, können die Anlageflächen auch zur Anlage am Verbindungsbereich und zum Verbinden, insbesondere Verkleben, des Ständerelements mit dem Verbindungsbereich vorgesehen sein. Dies kann aber in vielen Fällen zu einer Schwächung des Verbindungsbereichs beitragen und daher weniger bevorzugt sein. Aber auch hier ist eine klare Unterscheidung schwierig, weil der Verbindungsbereich keine klaren Grenzen aufweisen muss.

Aus Kostengründen und zur Einsparung von Gewicht ist es bevorzugt, wenn das Paneelstrukturelement einschalig ausgebildet ist. Dann wird auf eine Sandwichstruktur aus zwei Paneelen und dazwischen angeordneten Ständerelementen oder Kernschichten verzichtet. Vorzugsweise ist überhaupt nur ein Paneel vorgesehen. Es könnte zwar grundsätzlich noch wenigstens ein zweites Paneel auf der anderen Seite der Ständerelemente vorgesehen sein. Dieses wenigstens eine weitere Paneel ersteckt sich dann aber beispielsweise nicht wenigstens im Wesentlichen über die gesamte Länge des Paneelstrukturelements und/oder ist nicht wenigstens im Wesentlichen geschlossen ausgebildet. Damit übernimmt das wenigstens eine zusätzliche Paneel eine andere Funktion als das in Bezug auf das Nutzfahrzeug bzw. den Laderaum auf der Außenseite der Ständerelemente angeordnete Paneel. Das zusätzliche Paneel kann beispielsweise dem Schutz des äußeren Paneels vor mechanischer Einwirkung beim Be- und/oder Entladen und/oder zur Ladungssicherung dienen.

Wenn das wenigstens eine Paneel von der dem Paneel abgewandten Seite der Ständerelemente wenigstens abschnittsweise oder überwiegend zwischen den jeweiligen Ständerelementen zugänglich ist, kann in diesen Abschnitten bzw. Bereichen Material und damit Gewicht sowie Kosten eingespart werden. Die Stabilität wird dann wenigstens in diesen Bereichen durch die Ständerelemente und das äußere, geschlossene sowie von der Innenseite wenigstens abschnittsweise zugängliche Paneel bereitgestellt. Alternativ oder zusätzlich kann Material und damit Gewicht eingespart werden, um die Kosten zu senken, wenn wenigstens die überwiegende Anzahl der Ständerelemente und/oder die Ständerelemente jeweils überwiegend von der dem geschlossen Paneel abgewandten Seite der Ständerelemente zugänglich ist. Die entsprechenden Ständerelemente sind dann also an einer Seite nicht oder nur bedingt von einem Paneel abgedeckt, während die Ständerelemente von der gegenüberliegenden Außenseite von dem dort vorgesehenen, geschlossenen Paneel wenigstens im Wesentlichen verdeckt werden.

Um Gewicht einzusparen und trotzdem ein festes und steifes Paneelstrukturelement bereitzustellen, bietet es sich an, wenn wenigstens die überwiegende Anzahl, insbesondere wenigstens im Wesentlichen alle, Ständerelemente als Profile ausgebildet sind. Dabei bieten Metallprofile einen guten Kompromiss zwischen Kosten und mechanischen Eigenschaften. Alternativ oder zusätzlich können die Ständerelemente als Hohlprofile ausgebildet sein, um Gewicht einzusparen. Zudem können die Ständerelemente als offene Hohlprofile ausgebildet sein. Dies spart weiter Material ein und führt dennoch zu einer hohen Stabilität, insbesondere wenn das Profil über die Verbindung mit dem Paneel durch das Paneel geschlossen wird. Die Ständerelemente können beispielsweise einen trapezförmigen und/oder omegaförmigen und/oder hutförmigen Querschnitt aufweisen, und zwar insbesondere wenigstens im Wesentlichen durchgängig. Dies erlaubt eine stabile und platzsparende Ausgestaltung der Profile.

Im Falle eines trapezförmigen Profils sind die Seitenteile des Profils vorzugsweise in Richtung des Paneels seitlich nach hinten abgeschrägt. Die entsprechenden Seitenteile schützen die Profile bzw. deren Verbindung mit dem Paneel, wenn die Ladung beim Be- und Entladen versehentlich mit den Ständerelementen kollidiert. Die Ladung kann dann seitlich an den Ständerelementen abgleiten. Der spitze Winkel des Seitenteils mit dem Paneel beträgt dabei vorzugsweise weniger als 60°, vorzugsweise weniger als 50°, insbesondere weniger als 40°. Bei einer deutlich größeren Neigung kann das Ständerelement bei Kollision mit der Ladung leicht vom Paneel abgerissen werden, ohne dass die Ladung dabei am Ständerelement abgleitet.

Wenn wenigstens die überwiegende Anzahl der Ständerelemente oder wenigstens im Wesentlichen alle Ständerelemente jeweils eine Aufnahme aufweisen, kann in dieser Aufnahme ein Verbindungsbereich zweier Paneelelemente wenigstens abschnittsweise aufgenommen sein. Dies schützt den Verbindungsbereich vor Beschädigung und vereinfacht das Be-und Entladen. Dabei bietet es sich an, wenn sich der Verbindungsbereich seitlich von dem Paneel weg und in Richtung des jeweiligen Ständerelements erstreckt. Anders ausgedrückt erstreckt sich der Verbindungsbereich wenigstens abschnittsweise in Richtung der Innenseite des Paneelestrukturelements bezogen auf das Nutzfahrzeug bzw. den Laderaum. Um den Verbindungsbereich und damit das Paneelstrukturelement auszusteifen können die Ständerelemente wenigstens überwiegend, insbesondere wenigstens im Wesentlichen alle mit Anlageflächen zu gegenüberliegenden Seiten der Verbindungsbereiche an den zugehörigen Paneelelementen anliegen. Sind die Ständerelemente über die Anlageflächen mit den Paneelelementen verbunden, insbesondere wenigstens verklebt, kann aus dem jeweiligen Ständerelement und dem Paneel ein geschlossenes Profilelement gebildet werden, was der Festigkeit und Steifigkeit zuträglich ist.

Aus fertigungstechnischen Gründen werden die miteinander verbundenen Paneelelemente an ihren jeweils benachbarten Rändern vorzugsweise zur Innenseite des Paneels bezogen auf das Nutzfahrzeug bzw. den Laderaum umgebogen. Besonders stabile Verbindungen werden dabei erhalten, wenn die Ränder abgekantet oder rolliert sind. So werden zudem relativ breite Anlageflächen der Ränder der benachbarten Paneelelemente erhalten. Zudem bietet es sich an, die umgebogenen, insbesondere abgekanteten oder rollierten, benachbarten Ränder der Paneelelemente jeweils miteinander zu verbinden, und zwar insbesondere formschlüssig, kraftschlüssig und/oder stoffschlüssig. Bevorzugt wird hier auch ein Verkleben sein, auch wenn dies bedarfsweise eher dem Abdichten als dem Verbinden dient. Die Verbindung ist somit geschützt und es wird eine relativ breite Verbindung zwischen den angrenzenden Paneelelementen bereitgestellt.

Um die Verbindung der angrenzenden Paneelelemente in den entsprechenden Verbindungsbereichen zu stärken, insbesondere solange die Verklebung noch keine hohen Kräfte aufnehmen kann, ist es zweckmäßig, die umgebogenen, insbesondere abgekanteten oder rollierten, benachbarten Ränder der Paneelelemente kraftschlüssig und/oder formschlüssig zu verbinden. Beispielsweise kann umgreifend wenigstens eine, insbesondere U-förmige, Spange und/oder Klammer vorgesehen sein. So können die Ränder der angrenzenden Paneelelemente beispielsweise zusätzlich zur Klebeverbindung gegeneinander fixiert werden. Dabei kann es besonders effektiv sein, wenn die Klammer dazu ausgebildet ist, eine elastische Rückstellkraft auf die umgebogenen, insbesondere abgekanteten oder rollierten, benachbarten Ränder der Paneelelemente auszuüben. Dies kann auch dem zuverlässigen Aushärten des Klebstoffs dienen.

Alternativ oder zusätzlich können die umgebogenen, insbesondere abgekanteten oder rollierten, benachbarten Ränder der Paneelelemente durch Nieten, insbesondere Stanznieten und/oder Durchsetzfügen, miteinander verbunden sein. Die Verbindung ist dann anders als die Klebeverbindung unmittelbar nach dem Fügen belastbar.

Das Paneelstrukturelement ist aufgrund des geringen Gewichts und der hohen Festigkeit besonders dazu geeignet, wenigstens überwiegend die Seitenwand, das Dach, die Stirnwand und/oder die Rückwand des Aufbaus zu bilden. Im Falle der Rückwand kann wenigstens eine Tür wenigstens im Wesentlichen aus dem Paneelstrukturelement gebildet sein. Insbesondere im Falle der Stirnwand, können entlang des Paneelstrukturelements unterschiedliche, insbesondere unterschiedlich breite, Ständerelemente vorgesehen sein. Da die Ladung beim Bremsen oder beim Beladen gegen die Stirnwand drückt, müssen diese Kräfte von der Stirnwand abgefangen werden. Die Kräfte sind jedoch in der Mitte der Stirnwand größer als an den Rändern der Stirnwand. Um diesem Kraftverlauf Rechnung zu tragen, können die Abstände der Ständerelemente in Richtung der Mitte der Stirnwand abnehmen und/oder kann die Breite der Ständerelemente in Richtung der Mitte der Stirnwand zunehmen. Jedenfalls können die Ständerelemente des Paneelstrukturelements in variierenden Abständen vorgesehen sein. Insbesondere für den Fall, dass es sich bei dem Paneelstrukturelement um eine Seitenwand handelt, bietet es sich an, wenn die Ständerelemente im gleichförmigen Abständen zueinander vorgesehen sind. Dabei bietet es sich aus Gründen der Stabilität besonders an, wenn der gleichförmige Abstand zwischen 0,3 m und 1,4 m, insbesondere zwischen 0,4 m und 1,3 m, beträgt. Wenn Ständerelemente in einem wiederkehrenden Abstand von zwischen 1,0 m bis 1,4 m, vorzugsweise von zwischen 1,1 m und 1,3 m, insbesondere von ungefähr 1,2 m, beträgt, kann erreicht werden, dass die Abstände der Ständerelemente entlang der Seitenwand mit der Länge zu transportierender Paletten, insbesondere sogenannter Europaletten, korrespondiert. Wenn die Ständerelemente in einem wiederkehrenden Abstand zwischen 0,4 m bis 0,8 m, vorzugsweise zwischen 0,5 m und 0,7 m, insbesondere von ungefähr 0,6 m, angeordnet sind, weisen jeweils übernächste Ständerelemente einen Abstand auf, der etwa der Länge zu transportierender Paletten, insbesondere sogenannter Europaletten, entspricht. Entsprechendes gilt für jeweils jedes dritte Ständerelement, wenn die Ständerelemente in einem wiederkehrenden Abstand von zwischen 0,3 m bis 0,5 m, insbesondere von ungefähr 0,4 m, angeordnet sind. Dann wird zudem erreicht, dass jeweils zwei übernächste Ständerelemente etwa im Abstand der Breite zu transportierender Paletten, insbesondere sogenannter Europaletten, angeordnet sind. Diese Breite entspricht etwa 0,8 m. Der entsprechende Abstand der Ständerelemente wird dabei vorzugsweise nicht zwischen den angrenzenden Rändern der Ständerelemente, sondern zwischen den sich entsprechenden Rändern oder zwischen den Mittellinien der benachbarten Ständerelemente gemessen. Ferner ist es nicht erforderlich, dass jeweils benachbarte Ständerelemente einen Abstand von zwischen 1,0 m bis 1,4 m, vorzugsweise von zwischen 1,1 m und 1,3 m, insbesondere von ungefähr 1,2 m, aufweisen. Dies kann beispielsweise jeweils für übernächste Ständerelemente gelten, die dann etwa im Abstand einer Palettenlänge angeordnet sind. Dazwischen kann dann, vorzugsweise ebenfalls regelmäßig beabstandet, wenigstens ein zusätzliches Ständerelement vorgesehen sein. Bei jeweils wenigstens einem zusätzlichen Ständerelement können die Abstände jeweils benachbarter Ständerelemente vorzugsweise zwischen 0,3 m und 0,5 m, insbesondere zwischen 0,5 m und 0,7 m, liegen.

Nachfolgend wird die Erfindung anhand einer lediglich Ausführungsbeispiele darstellenden Zeichnung näher beschrieben. In der Zeichnung zeigt
- Fig. 1: ein erfindungsgemäßes Nutzfahrzeug mit einem erfindungsgemäßen Kofferaufbau in einer perspektivischen Ansicht,
- Fig. 2: einen Abschnitt eines erfindungsgemäßen Paneelstrukturelements des Aufbaus gemäß Fig. 1 in einer perspektivischen Ansicht,
- Fig. 3A-B: unterschiedliche Ständerelemente zur Bildung eines Paneelstrukturelements in einer perspektivischen Ansicht,
- Fig. 4: ein Paneelelement zur Bildung eines Paneels des Aufbaus gemäß Fig. 1 in einer perspektivischen Ansicht,
- Fig. 5: den Schichtaufbau eines Paneelelements des Paneels gemäß Fig. 2 in einem Querschnitt und
- Fig. 6: ein Detail des Paneelstrukturelements aus Fig. 2 in einer Schnittansicht,
- Fig. 7A-B: Abschnitte des Paneelstrukturelements gemäß Fig. 2 in perspektivischen Schnittansichten,
- Fig. 8A-B: unterschiedliche Verbindungsabschnitte zweier Paneelemente in einer Schnittansicht,
- Fig. 9: Stirnwand in einer perspektivischen Ansicht und
- Fig. 10: eine Flügeltür in einer perspektivischen Ansicht.

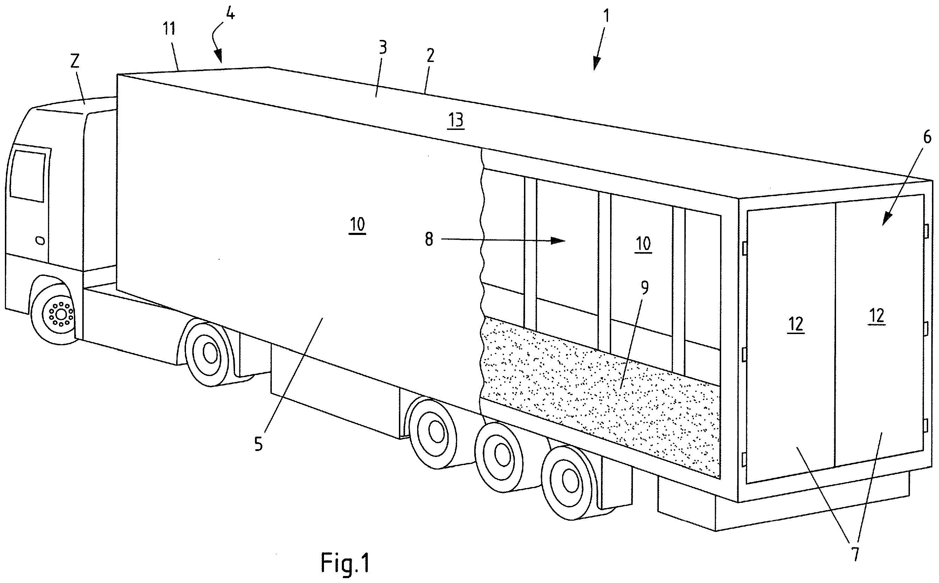

In der Fig. 1 ist ein Nutzfahrzeug 1 mit einem Aufbau 2 in Form eines Kofferaufbaus in einer perspektivischen Ansicht dargestellt, das von einer Zugmaschine Z gezogen wird. Der Aufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 begrenzt wird, der dem Aufstellen von Ladung dient. Die Seitenwände 5, die Stirnwand 4, die Flügeltüren 7 und das Dach 3 werden wenigstens im Wesentlichen aus Paneelstrukturelementen 10,11,12,13 gebildet

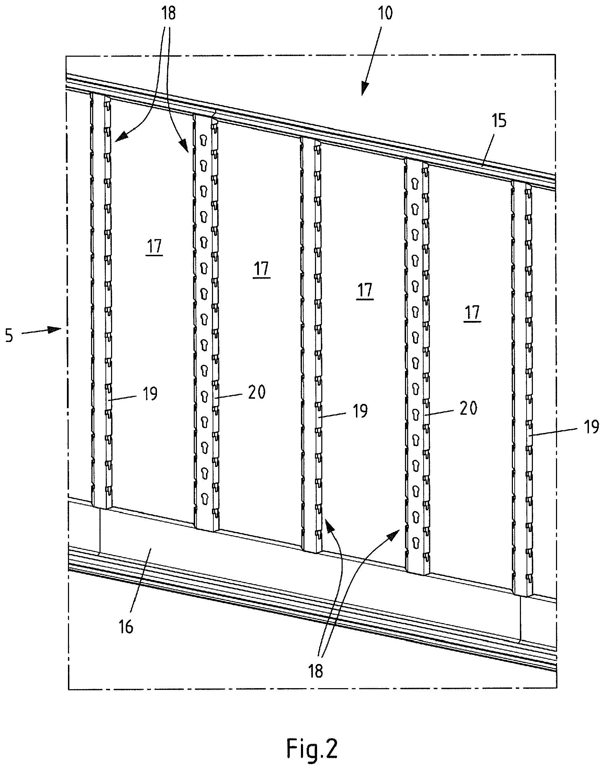

In der Fig. 2 ist ein Abschnitt eines Paneelstrukturelements 10 dargestellt, das bei dem dargestellten und insoweit bevorzugten Nutzfahrzeug 1 wenigstens im Wesentlichen eine Seitenwand 5 des Aufbaus 2 bildet. Das Paneelstrukturelement 10 ist einschalig ausgebildet, wobei die einzige Schale des Paneelstrukturelements 10 durch ein geschlossenes, die Seitenwand 5 verschließendes Paneel 14 gebildet wird. Das Paneel 14 ist an seinem oberen Rand mit einem Holm bzw. einer Holmstruktur 15 verbunden, die sich entlang der Seitenwand 5 erstreckt und die Verbindung der Seitenwand 5 mit dem Dach 3 bereitstellt. Die Holmstruktur 15 ist als verwindungssteifes Trägerelement mit einem hohen Flächenträgheitsmoment ausgebildet, um so der Aussteifung des Aufbaus 2 zu dienen. Dem unteren Rand des Paneels 14 zugeordnet ist eine sogenannte Sockelscheuerleiste 16 vorgesehen, die die Seitenwand 5 vor Beschädigungen während des Be- und Entladens schützt. So stoßen bzw. scheuern Hubwagen, Rollwagen, Paletten etc. beim Be- und Entladen vornehmlich an die Sockelscheuerleiste 16, die diesen Belastungen besser widerstehen kann, als andere Bereiche des Paneelstrukturelements 10.

Das Paneel 14 des Paneelstrukturelements 10 weist eine Reihe von in Längsrichtung des Paneelestrukturelements 10 nebeneinander angeordneter Paneelelemente 17 auf, die sich wenigstens im Wesentlichen über die gesamte Breite oder Höhe des Paneelestrukturelements 10 bzw. der Seitenwand 5 erstrecken. Den Verbindungsbereichen 18 zweier aneinander angrenzender Paneelelemente 17 zugeordnet ist jeweils ein Ständerelement 19,20, das sich quer zur Längsrichtung des Paneelestrukturelements 10 erstreckt. Bei dem dargestellten und insoweit bevorzugten Paneelestrukturelement 10 erstrecken sich die Ständerelemente 19,20 wenigstens im Wesentlichen vertikal. Zudem erstrecken sich die Ständerelemente 19,20 über die gesamte Breite oder Höhe des Paneelestrukturelements 10 bzw. der Seitenwand 5. Dadurch tragen die Ständerelemente 19,20 die Holmstruktur bzw. das Dach 3, dessen Gewicht über die Holmstruktur 15 wenigstens teilweise an die Ständerelemente 19,20 abgeleitet wird. Die Gewichtskräfte des Dachs werden von den Ständerelementen 19,20 in die Bodenstruktur des Aufbaus 2 weitergeleitet.

Die einzelnen Paneelelemente 17 weisen eine Breite zwischen 550 mm und 650 mm auf. Mithin beträgt auch der Abstand jeweils benachbarter Ständerelemente 19,20 ebenfalls zwischen 550 mm und 650 mm. Es wären aber auch Breiten der Paneelelemente 17 zwischen beispielsweise 1100 mm und 1300 mm denkbar und zweckmäßig. Dann würde bedarfsweise der Abstand der jeweils benachbarten Ständerelemente 19,20 wenigstens etwa der Breite der Paneelelemente 17 entsprechen. Der Abstand wird dabei nicht von den einander zugeordneten Rändern der Ständerelemente 19,20, sondern von den Mittellinien der Ständerelemente 19,20 oder den Stellen der Ständerelemente 19,20 aus gemessen, die die Verbindungsbereiche 18 der zugeordneten Paneelelemente 17 überdecken. Bei dem dargestellten und insoweit bevorzugten Paneelestrukturelement 10 sind zwei Arten von Ständerelementen 19,20 vorgesehen, die jeweils abwechselnd zueinander entlang der Längsrichtung des Paneelestrukturelements 10 vorgesehen sind.

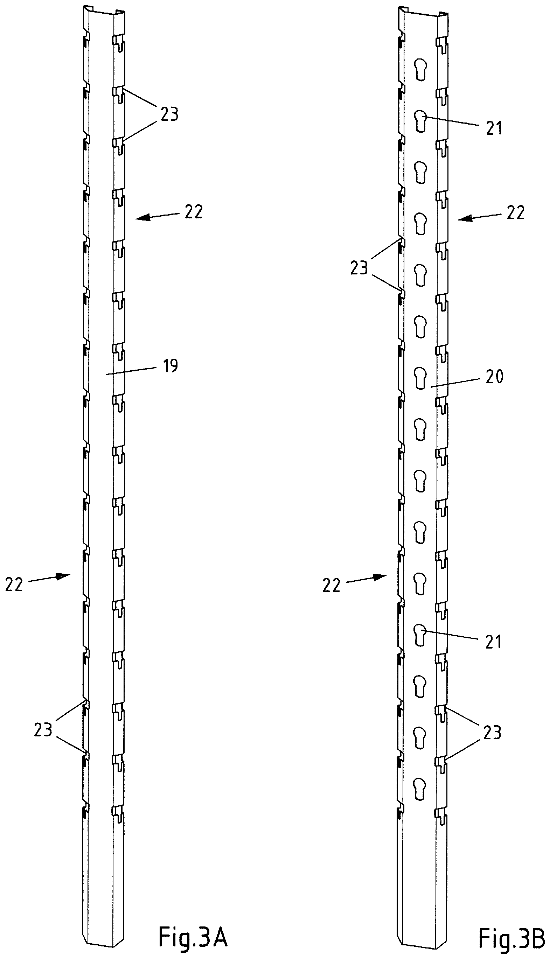

In der Fig. 3A-B sind die beiden Arten von Ständerelementen 19,20 separat dargestellt. Eine Art der Ständerelemente 19 ist schmaler als die andere Art der Ständerelemente 20. Die breitere Art der Ständerelemente 19,20 weist zudem an der von dem Paneel 14 wegweisenden Seite über die Länge des Ständerelements 19,20 verteilt mehrere Ladungssicherungsöffnungen 21 zum Einhaken von Ladungssicherungsmitteln auf. Die breiteren Ständerelemente 20 sind ferner so angeordnet, dass sie ausgehend von der Stirnwand 4, jeweils etwa im Abstand von einer Europalette, also etwa zwischen 1150 mm und 1250 mm aufeinander folgen. Der Abstand benachbarter Ständerelemente 19,20 kann mithin bevorzugt zwischen 550 mm und 650 mm betragen. Bedarfsweise, insbesondere in Bezug auf die Länge von Europaletten, kann der Abstand benachbarter Ständerelemente 19,20 aber auch zwischen 1100 mm und 1300 mm betragen. Insbesondere in Bezug auf die Breite von Europaletten in der Größenordnung von 800 mm kann der Abstand benachbarter Ständerelemente 19,20 aber auch zwischen 300 mm und 500 mm betragen. Den beiden Ständerelementen 19,20 ist gemein, dass sie seitliche, nach außen in Richtung des Paneels abgeschrägte Seitenflächen 22 aufweisen, die bei einer Kollision mit der Ladung beim Be- und Entladen des Aufbaus 2 die Ladung in Richtung des Laderaums 8 ableiten, um eine nachhaltige Beschädigung des entsprechenden Ständerelements 19,20 zu vermeiden. In den Seitenflächen 22 können über die Länge des Ständerelements 19,20 verteilt mehrere Ladungssicherungsöffnungen 23 zum Einhaken von Ladungssicherungsmitteln oder von Ladungssicherungsbalken vorgesehen sein. Grundsätzlich könnten stelle von unterschiedlichen Arten von Ständerelementen 19,20 bei einem Paneelestrukturelement 10 auch nur gleichartige Ständerelemente 19,20 vorgesehen sein.

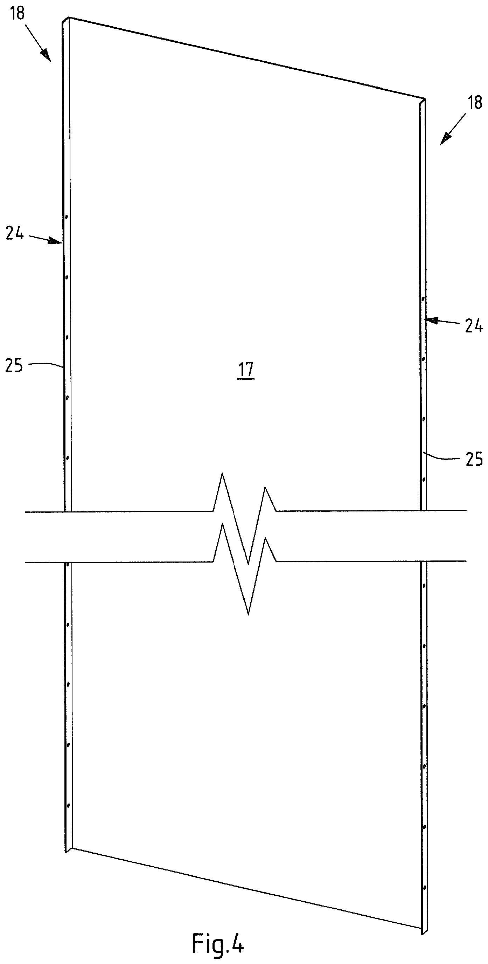

In der Fig. 4 ist ein Paneelelement 17 des Paneels 14 aus Fig. 2 dargestellt. Die Paneelelemente 17 des Paneels 14 aus Fig. 2 sind gleichartig aufgebaut und weisen demnach jeweils dieselben Abmessungen auf, auch wenn dies nicht zwingend der Fall sein muss. Die Paneelelemente 17 sind in den Verbindungsbereichen 18 an ihren seitlichen Rändern 24 nach innen in Richtung des Laderaums 8 umgebogen. Die Ränder 24 weisen daher jeweils eine Verbindungsfläche 25 auf, die aneinander angrenzend und wenigstens im Wesentlichen parallel zueinander ausgerichtet sind. Die entsprechenden Verbindungsflächen 25 werden dann zur Bildung des Paneels 14 miteinander verbunden, insbesondere verklebt. Die Paneelelemente 14 sind jeweils als mehrschichtiges Verbundlaminat 26 ausgebildet.

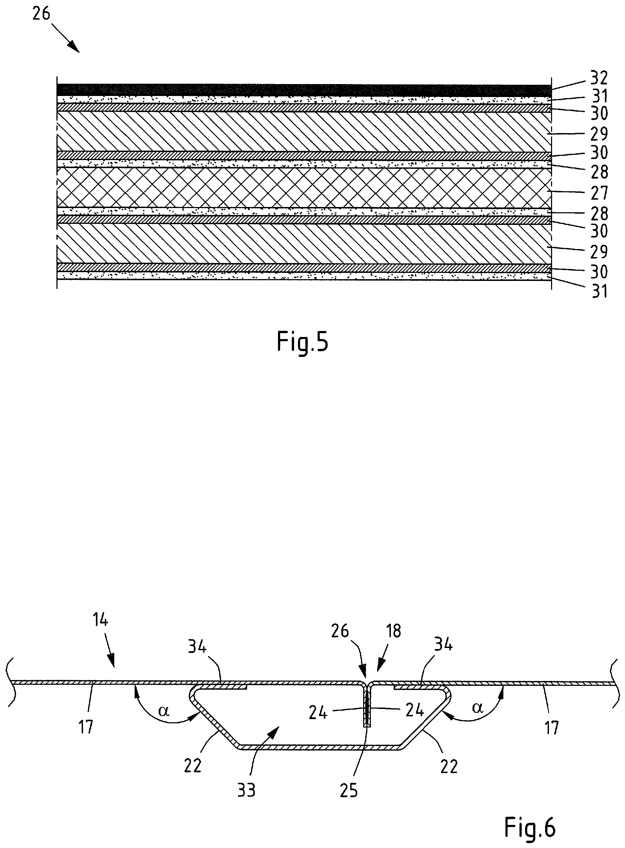

Der Aufbau des vorliegenden und insoweit bevorzugten Verbundlaminats 26 ist in der Fig. 5 exemplarisch dargestellt, wobei die Schichtdicken des Verbundlaminats nicht maßstabsgetreu wiedergegeben sind. Bei diesem Verbundlaminat 26 ist eine Kunststoffschicht 27 aus wenigstens im Wesentlichen Polypropylen (PP) vorgesehen, in dessen äußere Schichten ein Haftvermittler in Form von Maleinsäureanhydrid eingebracht ist. Die Kunststoffschicht 27 weist eine Dicke zwischen 0,8mm und 1,2 mm auf. Zudem sind auf die Außenseiten der Kunststoffschicht 27 Haftvermittlerschichten und/oder Lack-, insbesondere Klarlackschichten 28, einer Dicke von etwa 1 µm aufgebracht. An diese Klarlackschichten 28 schließen sich Metallschichten 29 einer Dicke von 200 µm bis 300 µm an, die jeweils an beiden Seiten mit einer Aluminium-Zink-Beschichtung 30 einer Dicke von zwischen 10 µm und 15µm versehen sind. Dabei sind die Metallschichten 29 bedarfsweise zunächst mit den Lack-, insbesondere Klarlackschichten 28, versehen, die dann über die Haftvermittlerschichten an die Kunststoffschicht 27 angebunden werden. Die äußeren Seiten der Metallschichten 29 sind wiederum mit einer Klarlackschicht 31 einer Dicke von etwa 1 µm überzogen. Die Außenseite des Paneelelements 17 bezogen auf den Laderaum 8 bzw. das Nutzfahrzeug 1 ist zudem mit einer Lackschicht 32, bedarfsweise Klarlackschicht, versehen, die eine Dicke zwischen 10 µm und 15 µm aufweist.

In der Fig. 6 ist ein Querschnitt des Paneelstrukturelements 10 im Bereich eines Ständerelements 20 und eines Verbindungsbereichs 18 zweier Paneelelemente 17 dargestellt. Die Paneellelemente 17 weisen angrenzend zueinander umgebogene Ränder 24 auf, die sich bei den dargestellten und insoweit bevorzugten Paeelelementen 17 wenigstens abschnittsweise senkrecht zu dem Paneelstrukturelement 10 nach innen in Richtung des Laderaums 8 erstrecken. In diesen Abschnitten weisen die Ränder 24 der Paneelelemente 17 aneinandergrenzende Verbindungflächen 25 auf, die über eine Klebeverbindung 39 miteinander verklebt sind, auch wenn die Klebeverbindung 39 bedarfsweise eher dem Abdichten des Spalts zwischen den Paneelelementen 17 dient. Alternativ oder zusätzlich können im Verbindungsbereich 18 kraftschlüssige und/oder formschlüssige Verbindungen, beispielsweise Nietverbindungen, vorgesehen sein. Der entsprechende Verbindungbereich 18 wird von dem zugeordneten Ständerelement 20 überdeckt und übergriffen. Das Ständerelement 20 weist dabei die Form eines einseitig offenen Hohlprofils auf, das in seinem Inneren eine Aufnahme 33 für wenigstens Teile des Verbindungsbereichs 18 bereithält. Das Ständerelement 20 weist dabei einen trapezförmigen Querschnitt mit zwei in Richtung des Paneels 14 schräg nach außen geneigten Seiten 22 auf. Diese Seiten 22 verlaufen dabei in einem Winkel α von etwa 130° bis 150° in Bezug auf den sich seitlich anschließenden Bereich der Paneelelemente 17. Angrenzend zu den beiden dem Ständerelement 20 zugeordneten Paneelelementen 17 weist das Ständerelement 20 Anlageflächen 34 zur Anlage an die Paneelelemente 17 auf, wobei die Anlageflächen 34 vorliegend wenigstens im Wesentlichen parallel zueinander ausgerichtet und vorliegend auch wenigstens im Wesentlichen in einer gemeinsamen Ebene angeordnet sind. Mit diesen Anlageflächen 34 ist das Ständerelement 20 mit den angrenzenden Paneelelementen 17 verbunden, insbesondere verklebt.

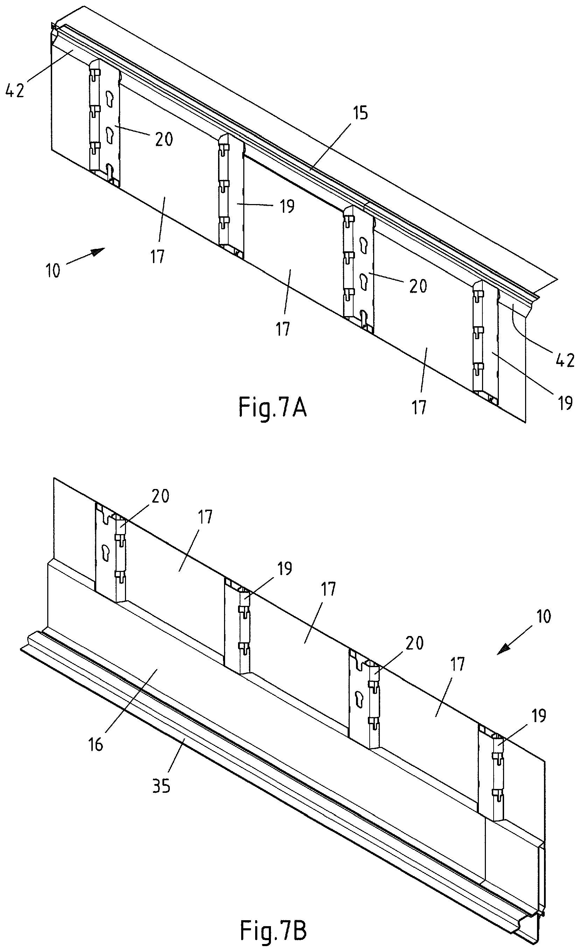

In den Fig. 7A-B ist das Paneelestrukturelement 10 in einer Schnittdarstellung, und zwar in der Fig. 7A einmal von schräg unten und in der Fig. 7B einmal von schräg oben dargestellt. Die Ständerelemente 19,20 tragen an ihrem oberen Ende die Holmstruktur 15 und damit das Dach 3, weshalb die oberen Enden der Ständerelemente 19,20 mit der Holmstruktur 15 verbunden sind. Die Paneelelemente 17 sind ebenfalls mit der Holmstruktur 15 verbunden, aber eher um die Seitenwand 5 zu schließen als unbedingt um die Holmstruktur 15 zu tragen. Am unteren Rand des Paneelestrukturelements 10 ist die Sockelscheuerleiste 16 vor den Ständerelementen 19,20 angeordnet. Die Sockelscheuerleiste 16 ist dabei mit den unteren Rändern der Paneelelemente 17 verbunden, insbesondere verklebt. Über die Sockelscheuerleiste 16 sind die Paneelemente17 bzw. ist das Paneelestrukturelement 10 mit einer Bodenstruktur bzw. Rahmenelement 35 der Bodenstruktur verbunden, insbesondere verklebt. Anstelle einer Sockelscheuerleiste 16 kann aber auch ein anderes, insbesondere aufgeklebtes, Abschlussprofil bzw. Verbindungsprofil am unteren Rand der Paneelelemente 17 vorgesehen sein. Zwischen den Ständerelementen 19,20 ist die Sockelscheuerleiste 16 mit den Planenelementen 17 verbunden, insbesondere verklebt. Die unteren Enden der Ständerelemente 19,20 sind zudem mit einem Rahmenelement 35 der Bodenstruktur verbunden, um beispielsweise die Gewichtskräfte des Dachs 3 an die Bodenstruktur abzuleiten. Das Rahmenelement 35 der Bodenstruktur weist dabei zudem eine Auflagefläche 36 für einen Rand des Ladebodens 9 auf. Am oberen Rand des Paneelestrukturelements 10 sind die Paneelelemente 17 mit einem Innenprofil 42 verbunden, insbesondere verklebt, wobei das Innenprofil 42 mit der Holmstruktur 15 verbunden, insbesondere verklebt, sein kann.

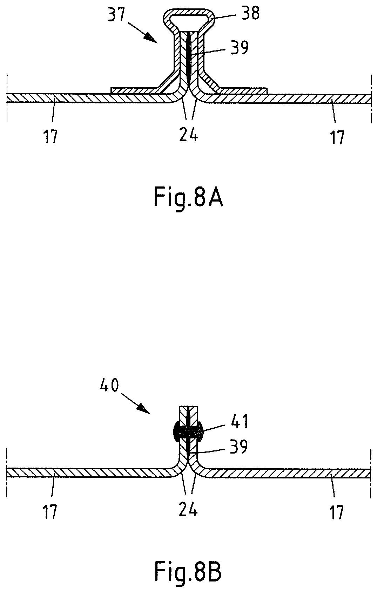

In den Fig. 8A-B sind unterschiedliche Verbindungsabschnitte zweier Paneelemente 17 im Detail dargestellt. In der Fig. 8A ist ein Verbindungsbereich 37 dargestellt, bei dem auf die angrenzenden Ränder 24 der miteinander verklebten Paneelelemente 17 eine Klammer 38 aufgesetzt ist. Die Klammer 38 stellt eine elastische Rückstellkraft bereit, welche von außen gegen die Ränder 24 und damit die Ränder 24 zusammendrückt. Die Ränder 24 bleiben bereits fixiert, bevor die Klebeverbindung 39 ausgehärtet ist. In der Fig. 8B ist ein Verbindungsbereich 40 dargestellt, bei dem in gewissen Abständen Nietverbindungen 41, insbesondere Durchsetzfügeverbindungen, vorgesehen sind. Durch die Nietverbindungen 41 werden die angrenzenden Ränder 24 der Paneelelemente 17 aneinander gehalten, bevor die Klebeverbindung 39 abschließend belastbar ist..

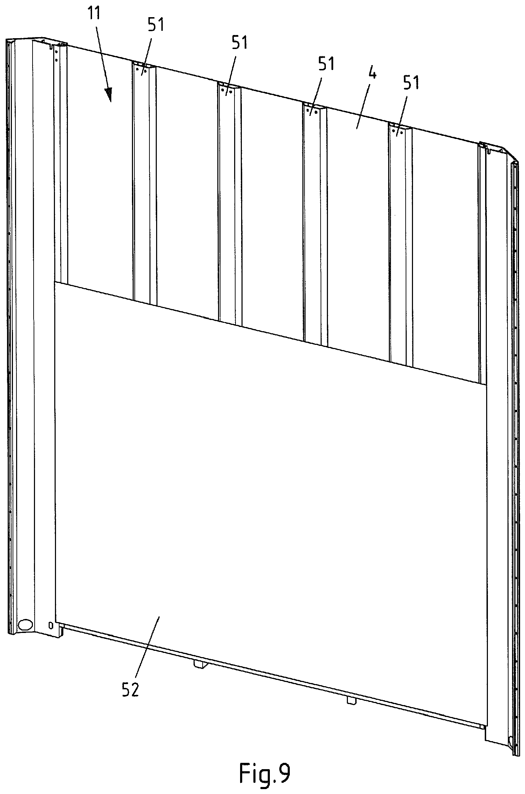

In der Fig. 9 ist das Paneelstrukturelement 11 von der dem Laderaum 8 zugewandten Seite der Stirnwand 4 des Aufbaus 2 dargestellt. Die Stirnwand 4 ist ähnlich zu der Seitenwand 5 aufgebaut. Ein wesentlicher Unterschied besteht jedoch darin, dass die Ständerelemente 51 der Stirnwand 4 verglichen mit der Seitenwand 5 in einem engeren Abstand zueinander angeordnet sind. Ferner ist an der Innenseite der Ständerelemente 51 ein plattenförmiger Anfahrschutz 52 montiert, gegen den sich die Ladung abstützen kann. Zudem weisen die Ständerelemente 51 anders als wenigstens einige der Ständerelemente der Seitenwand 5 keine Ladungssicherungsöffnungen zur Aufnahme von Ladungssicherungsmitteln auf. Zwingend ist dies jedoch nicht.

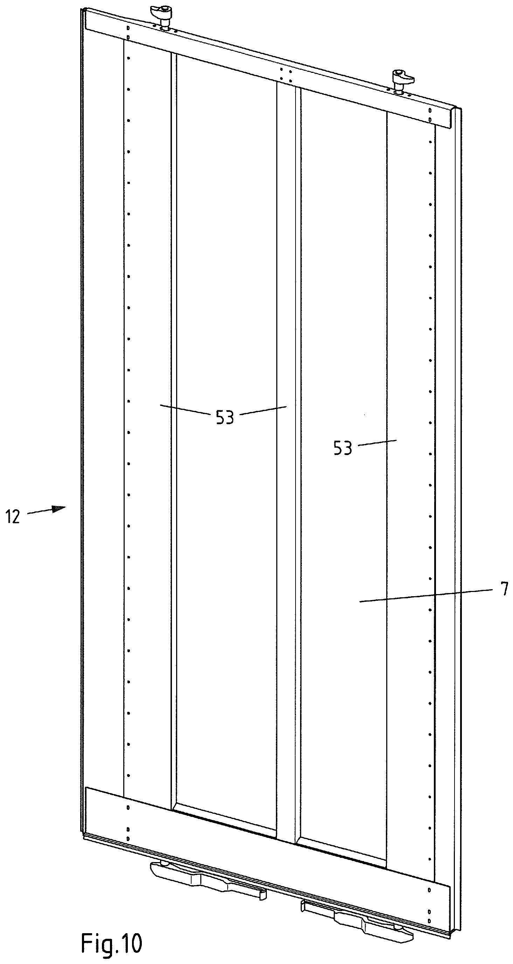

In der Fig. 10 ist das Paneelstrukturelement 12 von der Innenseite einer Flügeltür 7 der Rückwand 6 des Aufbaus 2 dargestellt. Die Flügeltür 7 ist ähnlich zu der Seitenwand 5 und der Stirnwand 4 aufgebaut, wobei bei der dargestellten und insoweit bevorzugten Flügeltür 7 wiederum andere Abstände zwischen den Ständerelementen 53 verwirklicht sein können. Auch weisen die Ständerelemente 53 keine Ladungssicherungsöffnungen zur Montage von Ladungssicherungsmitteln auf. Im Übrigen kann an den Flügeltüren 7 bedarfsweise auf Sockelscheuerleisten 16 verzichtet werden.

Das Paneelstrukturelement 13 des Dachs 3 ist ebenfalls sehr ähnlich zu dem Paneelstrukturelement 10 der Seitenwand 5 aufgebaut. Dabei sind jedoch Ständerelemente ohne Ladungssicherungsöffnungen zur Montage von Ladungssicherungsmitteln vorgesehen, die mit beiden Enden mit gegenüberliegenden Holmstrukturen des Dachs 3 verbunden sind. Außerdem erstrecken sich die Ständerelemente wenigstens im Wesentlichen horizontal.

### Bezugszeichenliste

- 1: Nutzfahrzeug
- 2: Aufbau
- 3: Dach
- 4: Stirnwand
- 5: Seitenwand
- 6: Rückwand
- 7: Flügeltür
- 8: Laderaum
- 9: Ladeboden
- 10,11: Paneelstrukturelement
- 12,13: Paneelstrukturelement
- 14: Paneel
- 15: Holmstruktur
- 16: Sockelscheuerleiste
- 17: Paneelelement
- 18: Verbindungsbereich
- 19: Ständerelement
- 20: Ständerelement
- 21: Ladungssicherungsöffnung
- 22: Seitenfläche
- 23: Ladungssicherungsöffnung
- 24: Rand
- 25: Verbindungsfläche
- 26: Verbundlaminat
- 27: Kunststoffschicht
- 28: Klarlackschicht
- 29: Metallschicht
- 30: Aluminium-Zink-Beschichtung
- 31: Klarlackschicht
- 32: Lackschicht
- 33: Aufnahme
- 34: Anlagefläche
- 35: Rahmenelement
- 36: Auflagefläche
- 37: Verbindungsbereich
- 38: Klammer
- 39: Klebeverbindung
- 40: Verbindungsbereich
- 41: Nietverbindung
- 42: Innenprofil
- 51: Ständerelement
- 52: Anfahrschutz
- 53: Ständerelement

## Patentansprüche

1. Paneelstrukturelement (10,11,12,13) eines Aufbaus (2) eines Nutzfahrzeugs (1), insbesondere Lastkraftwagen, Anhänger oder Sattelauflieger, mit einer Mehrzahl von zur Aussteifung des Paneelstrukturelements (10,11,12,13) vorgesehenen, wenigstens im Wesentlichen quer zur Längsrichtung des Paneelstrukturelements (10,11,12,13) ausgerichteten und in Längsrichtung des Paneelstrukturelements (10,11,12,13) zwischen den Rändern des Paneelstrukturelements (10,11,12,13) angeordneten sowie voneinander beabstandeten Ständerelementen (19,20,51,53) und mit einem sich über wenigstens im Wesentlichen die gesamte Länge und wenigstens im Wesentlichen die gesamte Höhe des Paneelstrukturelements (10,11,12,13) erstreckenden, insbesondere geschlossenen, Paneel (14), wobei das Paneel (14) aus wenigstens einem Paneelelement (17) gebildet wird, wobei die Ständerelemente (19,20,51,53) mit dem Paneel (14) verbunden sind, wobei das wenigstens eine Paneelelement (17) aus einem Verbundlaminat (26) umfassend wenigstens zwei Metallschichten (29) und wenigstens eine zwischen den wenigstens zwei Metallschichten (29) vorgesehene Kunststoffschicht (27) gebildet wird, wobei das Paneel (14) eine Mehrzahl von in Längsrichtung des Paneelstrukturelements (10,11,12,13) nebeneinander angeordneten Paneelelementen (17) aufweist, wobei die Paneelelemente (17) über sich wenigstens im Wesentlichen quer zur Längsrichtung des Paneelstrukturelements (10,11,12,13) erstreckenden Verbindungsbereichen (18,37,40,42,44,46,48) miteinander verbunden sind und wobei die Ständerelemente (19,20,51,53) wenigstens teilweise den Verbindungsbereichen (18,37,40,42,44,46,48) der Paneelelemente (17) zugeordnet sind,
**dadurch gekennzeichnet, dass** die Ständerelemente (19,20,51,53) wenigstens teilweise die Verbindungsbereiche (18,37,40,42,44,46,48) der Paneelelemente (17) überdeckend und/oder überbrückend angeordnet sind.

2. Paneelstrukturelement nach Anspruch 1,
**dadurch gekennzeichnet, dass** die Kunststoffschicht (27) des wenigstens einen Paneelelements (17) wenigstens im Wesentlichen aus einem thermoplastischen Kunststoff, vorzugsweise aus wenigstens einem Olefin, insbesondere wenigstens überwiegend aus Polypropylen (PP) gebildet wird und/oder dass wenigstens eine der wenigstens zwei Metallschichten (29) des wenigstens einen Paneelelements (17) aus Aluminium und/oder Stahl gebildet wird und/oder dass wenigstens eine Außenseite des wenigstens einen Paneelelements (17) wenigstens im Wesentlichen aus einem Lack, insbesondere Klarlack (32), gebildet wird.

3. Paneelstrukturelement nach Anspruch 2,
**dadurch gekennzeichnet, dass** die Kunststoffschicht (27) an wenigstens einer Seite einen Lack, insbesondere Klarlack (28) und/oder einen Haftvermittler, insbesondere Maleinsäureanhydrid, aufweist und/oder dass die Metallschicht (29) an wenigstens einer Seite eine wenigstens im Wesentlichen aus Aluminium, Magnesium und/oder Zink gebildete Beschichtung (30) aufweist.

4. Paneelstrukturelement nach einem der Ansprüche 1 bis 3,
**dadurch gekennzeichnet, dass** die Paneelelemente (17) über sich wenigstens im Wesentlichen quer zur Längsrichtung des Paneelstrukturelements (10,11,12,13) erstreckenden Verbindungsbereichen (18,37,40,42,44,46,48) miteinander verklebt sind.

5. Paneelstrukturelement nach Anspruch 4,
**dadurch gekennzeichnet, dass** die Ständerelemente (19,20,51,53) wenigstens teilweise außerhalb der Verbindungsbereiche (18,37,40,42,44,46,48) der Paneelelemente (17) mit jeweils den über Verbindungsbereiche (18,37,40,42,44,46,48) miteinander verbundenen Paneelelementen (17) verbunden sind.

6. Paneelstrukturelement nach einem der Ansprüche 1 bis 5,
**dadurch gekennzeichnet, dass** das Paneelstrukturelement (10,11,12,13) einschalig ausgebildet ist und dass, vorzugsweise, das, insbesondere das sich wenigstens im Wesentlichen über die gesamte Länge des Paneelstrukturelements (10,11,12,13) erstreckende, vorzugsweise geschlossene, Paneel (14) auf lediglich einer Seite der Ständerelemente (19,20,51,53) vorgesehen ist.

7. Paneelstrukturelement nach einem der Ansprüche 1 bis 6,
**dadurch gekennzeichnet, dass** das wenigstens eine Paneel (14) zwischen den jeweiligen Ständerelementen (19,20,51,53) von der dem Paneel (14) abgewandten Seite der Ständerelemente (19,20,51,53) wenigstens abschnittsweise, insbesondere überwiegend, zugänglich ist und/oder dass die Ständerelemente (19,20,51,53) wenigstens überwiegend von der dem Paneel (14) abgewandten Seite der Ständerelemente (19,20,51,53) zugänglich sind.

8. Paneelstrukturelement nach einem der Ansprüche 1 bis 7,
**dadurch gekennzeichnet, dass** die Ständerelemente (19,20,51,53) als Profile, vorzugsweise Metallprofile, ausgebildet sind und/oder dass die Ständerelemente (19,20,51,53) als, insbesondere offene, Hohlprofile ausgebildet sind und/oder dass die Ständerelemente (19,20,51,53), insbesondere wenigstens im Wesentlichen durchgängig, einen trapezförmigen und/oder omegaförmigen und/oder hutförmigen Querschnitt aufweist.

9. Paneelstrukturelement nach einem der Ansprüche 1 bis 8,
**dadurch gekennzeichnet, dass** die Ständerelemente (19,20,51,53) jeweils eine Aufnahme (33) zur wenigstens abschnittsweisen Aufnahme eines, insbesondere sich seitlich von dem Paneel (14) weg und in Richtung des jeweiligen Ständerelements (19,20,51,53) erstreckenden Verbindungsbereichs (18,37,40,42,44,46,48) aufweisen und dass, vorzugsweise, die Ständerelemente (19,20,51,53) mit Anlageflächen (34) zu gegenüberliegenden Seiten der Verbindungsbereiche (18,37,40,42,44,46,48) an den zugehörigen Paneelelementen (17) anliegen, insbesondere an den zugehörigen Paneelelementen (17) verklebt sind.

10. Paneelstrukturelement nach einem der Ansprüche 1 bis 9,
**dadurch gekennzeichnet, dass** die miteinander verbundenen Paneelelemente (17) an ihren jeweils benachbarten Rändern (24) zur Innenseite des Paneels (14) umgebogen, insbesondere abgekantet oder rolliertet, sind und dass, vorzugsweise, die umgebogenen, insbesondere abgekanteten oder rollierten, benachbarten Ränder (24) der Paneelelemente (17) jeweils miteinander verbunden, insbesondere verklebt, sind.

11. Paneelstrukturelement nach Anspruch 10,
**dadurch gekennzeichnet, dass** wenigstens eine, insbesondere U-förmige, Spange (43,49) und/oder Klammer (38) die umgebogenen, insbesondere abgekanteten oder rollierten, benachbarten Ränder (24) der Paneelelemente (17) umgreifend vorgesehen ist und dass, vorzugsweise, die Klammer (38) dazu ausgebildet ist, eine elastische Rückstellkraft auf die umgebogenen, insbesondere abgekanteten oder rollierten, benachbarten Ränder (24) der Paneelelemente (17) auszuüben.

12. Paneelstrukturelement nach Anspruch 11,
**dadurch gekennzeichnet, dass** die Spange (43,49) und/oder die Klammer(38) jeweils mit den umgebogenen, insbesondere abgekanteten oder rollierten, benachbarten Rändern (24) der Paneelelemente (17) durch Nieten (41), insbesondere Stanznieten und/oder Durchsetzfügen, verbunden sind und/oder dass die Spange (43,49) und/oder die Klammer (38) angrenzend zu den umgebogenen, insbesondere abgekanteten oder rollierten, benachbarten Rändern (24) der Paneelelemente (17) mit den Paneelen (14) verklebt sind.

13. Paneelstrukturelement nach einem der Ansprüche 10 bis 12,
**dadurch gekennzeichnet, dass** die umgebogenen, insbesondere abgekanteten oder rollierten, benachbarten Ränder (24) der Paneelelemente (17) durch Nieten (41), insbesondere Stanznieten und/oder Durchsetzfügen und/oder durch Tackern und/oder durch Schweißen verbunden sind.

14. Paneelstrukturelement nach einem der Ansprüche 1 bis 13,
**dadurch gekennzeichnet, dass** das Paneelstrukturelement (10,11,12,13) wenigstens überwiegend die Seitenwand (5), das Dach (3), die Stirnwand (4) und/oder die Rückwand (6) des Aufbaus (2) bildet und/oder dass die Ständerelemente (19,20,51,53) des Paneelstrukturelements (10,11,12,13) in variierenden Abständen und/oder in gleichförmigen Abständen, vorzugsweise in Abständen zwischen 0,3 m und 1,4 m, insbesondere zwischen 0,3 m und 0,5 m und/oder 0,5 m und 0,7 m und/oder 1,1 m und 1,3 m, zueinander angeordnet sind.

15. Kofferaufbau eines Nutzfahrzeugs, insbesondere Lastkraftwagen, Anhänger oder Sattelauflieger,
**dadurch gekennzeichnet, dass** wenigstens ein Paneelstrukturelement (10,11,12,13) nach einem der Ansprüche 1 bis 14 vorgesehen ist.

16. Nutzfahrzeug, insbesondere Lastkraftwagen, Anhänger oder Sattelauflieger, **dadurch gekennzeichnet, dass** wenigstens ein Kofferaufbau nach Anspruch 15 vorgesehen ist.

## Claims

1. Panel structure element (10, 11, 12, 13) of a body (2) of a commercial vehicle (1), in particular truck, trailer or semi-trailer, having a plurality of stand elements (19, 20, 51, 53), which are provided for reinforcing the panel structure element (10, 11, 12, 13), are aligned at least substantially transversely to the longitudinal direction of the panel structure element (10, 11, 12, 13), are arranged in the longitudinal direction of the panel structure element (10, 11, 12, 13) between the edges of the panel structure element (10, 11, 12, 13) and are spaced apart from one another, and having an, in particular closed, panel (14) extending over at least substantially the entire length and at least substantially the entire height of the panel structure element (10, 11, 12, 13), wherein the panel (14) is formed of at least one panel element (17), wherein the stand elements (19, 20, 51, 53) are connected to the panel (14), wherein the at least one panel element (17) is formed of a composite laminate (26) comprising at least two metal layers (29) and at least one plastic layer (27) provided between the at least two metal layers (29), wherein the panel (14) has a plurality of panel elements (17) arranged next to one another in the longitudinal direction of the panel structure element (10, 11, 12, 13), wherein the panel elements (17) are connected to one another via connection regions (18, 37, 40, 42, 44, 46, 48) extending at least substantially transversely to the longitudinal direction of the panel structure element (10, 11, 12, 13), and wherein the stand elements (19, 20, 51, 53) are assigned at least partially to the connection regions (18, 37, 40, 42, 44, 46, 48) of the panel elements (17), **characterised in that** the stand elements (19, 20, 51, 53) are arranged covering and/or bridging at least partially the connection regions (18, 37, 40, 42, 44, 46, 48) of the panel elements (17).

2. Panel structure element according to claim 1, **characterised in that** the plastic layer (27) of the at least one panel element (17) is formed at least substantially of a thermoplastic, preferably of at least one olefin, in particular at least predominantly of polypropylene (PP) and/or **in that** at least one of the at least two metal layers (29) of the at least one panel element (17) is formed of aluminium and/or steel and/or **in that** at least one outer side of the at least one panel element (17) is formed at least substantially of a varnish, in particular clear varnish (32).

3. Panel structure element according to claim 2, **characterised in that** the plastic layer (27) has, on at least one side, a varnish, in particular clear varnish (28) and/or an adhesion promoter, in particular maleic anhydride, and/or **in that** the metal layer (29) has, on at least one side, a coating (30) formed at least substantially of aluminium, magnesium and/or zinc.

4. Panel structure element according to any one of claims 1 to 3, **characterised in that** the panel elements (17) are adhered together via connection regions (18, 37, 40, 42, 44, 46, 48) extending at least substantially transversely to the longitudinal direction of the panel structure element (10, 11, 12, 13).

5. Panel structure element according to claim 4, **characterised in that** the stand elements (19, 20, 51, 53) are connected, at least partially outside of the connection regions (18, 37, 40, 42, 44, 46, 48) of the panel elements (17), with the panel elements (17) connected to one another via connection regions (18, 37, 40, 42, 44, 46, 48).

6. Panel structure element according to any one of claims 1 to 5, **characterised in that** the panel structure element (10, 11, 12, 13) is formed in a single-shell manner and **in that**, preferably, the, preferably closed, panel (14), in particular extending at least substantially over the entire length of the panel structure element (10, 11, 12, 13), is provided on only one side of the stand elements (19, 20, 51, 53).

7. Panel structure element according to any one of claims 1 to 6, **characterised in that** the at least one panel (14) between the respective stand elements (19, 20, 51, 53) is accessible at least in sections, in particular predominantly, from the side of the stand elements (19, 20, 51, 53) facing away from the panel (14) and/or **in that** the stand elements (19, 20, 51, 53) are accessible at least predominantly from the side of the stand elements (19, 20, 51, 53) facing away from the panel (14).

8. Panel structure element according to any one of claims 1 to 7, **characterised in that** the stand elements (19, 20, 51, 53) are designed as profiles, preferably metal profiles, and/or **in that** the stand elements (19, 20, 51, 53) are designed as, in particular open, hollow profiles and/or **in that** the stand elements (19, 20, 51, 53) have, in particular at least substantially continuously, a trapezoidal and/or omega-shaped and/or hat-shaped cross-section.

9. Panel structure element according to any one of claims 1 to 8, **characterised in that** the stand elements (19, 20, 51, 53) each have a receiving portion (33) for receiving at least in sections a connection region (18, 37, 40, 42, 44, 46, 48) in particular extending laterally away from the panel (14) and in the direction of the respective stand element (19, 20, 51, 53) and **in that**, preferably, the stand elements (19, 20, 51, 53) rest with contact surfaces (34) at opposing sides of the connection regions (18, 37, 40, 42, 44, 46, 48) on the associated panel elements (17), in particular are adhered to the associated panel elements (17).

10. Panel structure element according to any one of claims 1 to 9, **characterised in that** the panel elements (17) connected to one another are bent, in particular chamfered or rolled, at their respectively adjacent edges (24) towards the inner side of the panel (14) and **in that**, preferably, the bent, in particular chamfered or rolled, adjacent edges (24) of the panel elements (17) are each connected, in particular adhered to one another.

11. Panel structure element according to claim 10, **characterised in that** at least one, in particular U-shaped, clasp (43, 49) and/or clamp (38) is provided enclosing the bent, in particular chamfered or rolled, adjacent edges (24) of the panel elements (17) and **in that**, preferably, the clamp (38) is designed to exert an elastic restoring force on the bent, in particular chamfered or rolled, adjacent edges (24) of the panel elements (17).

12. Panel structure element according to claim 11, **characterised in that** the clasp (43, 49) and/or the clamp (38) are each connected to the bent, in particular chamfered or rolled, adjacent edges (24) of the panel elements (17) by riveting (41), in particular punch riveting and/or clinching and/or **in that** the clasp (43, 49) and/or the clamp (38) adjoining the bent, in particular chamfered or rolled, adjacent edges (24) of the panel elements (17) are adhered to the panels (14).

13. Panel structure element according to any one of claims 10 to 12, **characterised in that** the bent, in particular chamfered or rolled, adjacent edges (24) of the panel elements (17) are connected by riveting (41), in particular punch riveting and/or clinching and/or by stapling and/or by welding.

14. Panel structure element according to any one of claims 1 to 13, **characterised in that** the panel structure element (10, 11, 12, 13) forms at least predominantly the side wall (5), the roof (3), the end wall (4) and/or the rear wall (6) of the body (2) and/or **in that** the stand elements (19, 20, 51, 53) of the panel structure element (10, 11, 12, 13) are arranged in relation to one another at varying distances and/or at uniform distances, preferably at distances of between 0.3 m and 1.4 m, in particular of between 0.3 m and 0.5 m and/or 0.5 m and 0.7 m and/or 1.1 m and 1.3 m.

15. Box body of a commercial vehicle, in particular truck, trailer or semi-trailer, **characterised in that** at least one panel structure element (10, 11, 12, 13) according to any one of claims 1 to 14 is provided.

16. Commercial vehicle, in particular truck, trailer or semi-trailer, **characterised in that** at least one box body according to claim 15 is provided.

## Revendications

1. Élément structural de panneau (10, 11, 12, 13) d'une structure (2) d'un véhicule utilitaire (1), notamment un poids lourd, une remorque, ou une semi-remorque, avec une multitude d'éléments formant montants (19, 20, 51, 53), mutuellement espacés, prévus pour raidir l'élément structural de panneau (10, 11, 12, 13), dirigés au moins essentiellement transversalement par rapport à la direction longitudinale de l'élément structural de panneau (10, 11, 12, 13) et agencés en direction longitudinale de l'élément structural de panneau (10, 11, 12, 13) entre les bords de l'élément structural de panneau (10, 11, 12, 13) et avec un panneau (14), notamment fermé, s'étendant sur au moins essentiellement l'ensemble de la longueur et au moins essentiellement sur l'ensemble de la hauteur de l'élément structural de panneau (10, 11, 12, 13), le panneau (14) étant formé par au moins un élément de panneau (17), les éléments formant montants (19, 20, 51, 53) étant reliés au panneau (14), ledit au moins un élément de panneau (17) étant formé par un stratifié composé (26) comportant au moins deux couches métalliques (29) et au moins une couche en plastique (27) prévue entre lesdites au moins deux couches métalliques (29), le panneau (14) présentant une multitude d'éléments de panneau (17) agencés l'un à côté de l'autre en direction longitudinale de l'élément structural de panneau (10, 11, 12, 13), les éléments de panneau (17) étant mutuellement reliés au niveau des zones de jonction (18, 37, 40, 42, 44, 46, 48) s'étendant au moins essentiellement transversalement par rapport à la direction longitudinale de l'élément structural de panneau (10, 11, 12, 13) et les éléments formant montants (19, 20, 51, 53) étant associés au moins partiellement aux zones de jonction (18, 37, 40, 42, 44, 46, 48) des éléments de panneau (17), **caractérisé en ce que** les éléments formant montants (19, 20, 51, 53) sont agencés au moins partiellement de manière à recouvrir et/ou ponter les zones de jonction (18, 37, 40, 42, 44, 46, 48) des éléments de panneau (17).

2. Élément structural de panneau selon la revendication 1, **caractérisé en ce que** la couche en plastique (27) dudit au moins un élément de panneau (17) est formée au moins essentiellement par un matériau synthétique thermoplastique, de préférence au moins par une oléfine, notamment au moins principalement par du polypropylène (PP) et/ou **en ce qu'**au moins une desdites au moins deux couches métalliques (29) dudit au moins un élément de panneau (17) est formée en aluminium et/ou en acier et/ou **en ce que** au moins un côté extérieur dudit au moins un élément de panneau (17) est formé au moins essentiellement par un vernis, notamment par un vernis transparent (32).

3. Élément structural de panneau selon la revendication 2, **caractérisé en ce que** la couche en plastique (27) présente, sur au moins un côté, un vernis, notamment un vernis transparent (28) et/ou un agent adhésif, notamment de l'anhydride maléique, et/ou **en ce que** la couche métallique (29) présente, sur au moins un côté, un revêtement (30) formé, au moins essentiellement, en aluminium,
en magnésium, et/ou en zinc.

4. Élément structural de panneau selon l'une des revendications 1 à 3, **caractérisé en ce que** les éléments de panneau (17) sont collés entre eux au niveau des zones de jonction (18, 37, 40, 42, 44, 46, 48) s'étendant, au moins essentiellement, transversalement par rapport à la direction longitudinale de l'élément structural de panneau (10, 11, 12, 13).

5. Élément structural de panneau selon la revendication 4, **caractérisé en ce que** les éléments formant montants (19, 20, 51, 53) sont reliés, au moins partiellement à l'extérieur des zones de jonction (18, 37, 40, 42, 44, 46, 48) des éléments de panneau (17) avec respectivement les éléments de panneau (17) reliés entre eux par des zones de jonction (18, 37, 40, 42, 44, 46, 48).

6. Élément structural de panneau selon l'une des revendications 1 à 5, **caractérisé en ce que** l'élément structural de panneau (10, 11, 12, 13) est réalisé mono-pièce et **en ce que**, de préférence, l'on prévoit le panneau (14), de préférence fermé, notamment s'étendant au moins essentiellement sur l'ensemble de la longueur de l'élément structural de panneau (10, 11, 12, 13), sur seulement un côté des éléments formant montants (19, 20, 51, 53).

7. Élément structural de panneau selon l'une des revendications 1 à 6, **caractérisé en ce que** ledit au moins un panneau (14) entre les éléments formant montants (19, 20, 51, 53) correspondants est accessible, au moins partiellement, notamment principalement, par le côté des éléments formant montants (19, 20, 51, 53) opposé au panneau (14), et/ou **en ce que** les éléments formant montants (19, 20, 51, 53) sont accessibles, au moins principalement, par le côté des éléments formant montants (19, 20, 51, 53) opposé au panneau (14).

8. Élément structural de panneau selon l'une des revendications 1 à 7, **caractérisé en ce que** les éléments formant montants (19, 20, 51, 53) sont conçus en tant que profilés, de préférence des profilés métalliques, et/ou **en ce que** les éléments formant montants (19, 20, 51, 53) sont conçus en tant que profilés creux, notamment ouverts, et/ou **en ce que** les éléments formant montants (19, 20, 51, 53) présentent, notamment au moins essentiellement de manière continue, une section transversale trapézoïdale et/ou en forme d'oméga et/ou en forme de chapeau.

9. Élément structural de panneau selon l'une des revendications 1 à 8, **caractérisé en ce que** les éléments formant montants (19, 20, 51, 53) présentent respectivement un logement (33) pour loger au moins partiellement une zone de jonction (18, 37, 40, 42, 44, 46, 48), s'étendant notamment latéralement à partir du panneau (14) et en direction des éléments formant montants (19, 20, 51, 53) respectifs et **en ce que**, de préférence, les éléments formant montants (19, 20, 51, 53) reposent avec des surfaces d'appui (34) contre des côtés opposés des zones de jonction (18, 37, 40, 42, 44, 46, 48) sur les éléments de panneau (17) associés, notamment sont collés aux éléments de panneau (17) associés.

10. Élément structural de panneau selon l'une des revendications 1 à 9, **caractérisé en ce que** les éléments de panneau (17) reliés entre eux sont coudés, notamment repliés ou enroulés, au niveau de leurs bords (24) respectivement adjacents vers le côté intérieur du panneau (14) et **en ce que**, de préférence, les bords (24) adjacents coudés, notamment repliés ou enroulés, des éléments de panneau (17) sont respectivement reliés entre eux, notamment sont collés.

11. Élément structural de panneau selon la revendication 10, **caractérisé en ce que** l'on prévoit au moins une barrette (43, 49), notamment en forme de U, et/ou une attache (38) entourant les bords (24) adjacents coudés, notamment repliés ou enroulés des éléments de panneau (17) et **en ce que**, de préférence, l'attache (38) est conçue de sorte à exercer une force de rappel élastique sur les bords (24) adjacents coudés, notamment repliés ou enroulés, des éléments de panneau (17).

12. Élément structural de panneau selon la revendication 11, **caractérisé en ce que** la barrette (43, 49) et/ou l'attache (38) sont reliées respectivement aux bords (24) adjacents coudés, notamment repliés ou enroulés, des éléments de panneau (17) par rivetage (41), notamment auto-rivetage et/ou interpénétration et/ou **en ce que** la barrette (43, 49) et/ou l'attache (38) sont collés, contigus aux bords (24) adjacents coudés, notamment repliés ou enroulés, des éléments de panneau (17), aux panneaux (14).

13. Élément structural de panneau selon l'une des revendications 10 à 12, **caractérisé en ce que** les bords (24) adjacents coudés, notamment repliés ou enroulés, des éléments de panneau (17) sont reliés par rivetage (41), notamment auto-rivetage et/ou interpénétration et/ou par agrafage et/ou par soudage.

14. Élément structural de panneau selon l'une des revendications 1 à 13, **caractérisé en ce que** l'élément structural de panneau (10, 11, 12, 13) forme au moins principalement la paroi latérale (5), le toit (3), la paroi frontale (4) et/ou la paroi arrière (6) de la structure (2) et/ou **en ce que** les éléments formant montants (19, 20, 51, 53) de l'élément structural de panneau (10, 11, 12, 13) sont agencés l'un par rapport à l'autre à des distances variables et/ou à des distances uniformes, de préférence à des distances entre 0,3 m et 1,4 m, notamment entre 0,3 m et 0,5 m et/ou 0,5 m et 0,7 m et/ou 1,1 m et 1,3 m.

15. Structure de coffre d'un véhicule utilitaire, notamment un poids lourd, une remorque, ou une semi-remorque, **caractérisé en ce que** l'on prévoit au moins un élément structural de panneau (10, 11, 12, 13) selon l'une des revendications 1 à 14.

16. Véhicule utilitaire, notamment un poids lourd, une remorque ou une semi-remorque **caractérisé en ce que** l'on prévoit au moins une structure de coffre selon la revendication 15.
